# EUROPÄISCHE PATENTSCHRIFT

(11) **EP 2 960 045 B1**
(45) Veröffentlichungstag und Bekanntmachung des Hinweises auf die Patenterteilung: **06.06.2018**
(21) Anmeldenummer: 15001846.3
(22) Anmeldetag: 23.06.2015
(51) Int. Cl.: B65D 75/28, B65D 75/58, B29C 65/50, B31B 70/00, B32B 7/12

(54) **RUNDBODENBEUTEL, VERFAHREN ZUM HERSTELLEN EINES RUNDBODENBEUTELS SOWIE HEISSSCHMELZKLEBSTOFFGEBINDE**
BAG WITH ROUND BASE, METHOD FOR PRODUCING A BAG WITH A ROUND BASE AND HOT MELT ADHESIVE PACKAGE
SACHET A FOND CIRCULAIRE, PROCEDE DE FABRICATION D'UN SACHET A FOND CIRCULAIRE ET EMBALLAGE D'ADHESIF THERMOFUSIBLE

(30) Priorität: 23.06.2014 DE 102014008957
(43) Veröffentlichungstag der Anmeldung: 30.12.2015
(73) Patentinhaber: Tesseraux Spezialverpackungen GmbH, 68642 Bürstadt/Kreis Bergstraße (DE)
(72) Erfinder: OPITZ, Mirko, 69469 Weinheim (DE)
(74) Vertreter: Grosse Schumacher Knauer von Hirschhausen

(56) Entgegenhaltungen:
- EP-A1- 1 449 787
- EP-A2- 0 177 470
- DE-U1- 8 712 136
- DE-U1-202006 019 464
- DE-U1-202009 014 470
- US-A- 2 023 182
- US-A1- 2009 092 792

## Beschreibung

### GEBIET DER ERFINDUNG

Die Erfindung betrifft einen Rundbodenbeutel nach dem Oberbegriff des Anspruchs 1. Die hier beschriebenen Rundbodenbeutel sind insbesondere zum Verpacken von Heißschmelzklebstoffen geeignet und werden bevorzugt dementsprechend verwendet. Der Rundbodenbeutel umfasst einen Beutelkorpus und einen mittels einer Bodenverbindung an dem Beutelkorpus angeordneten Rundboden. Der Beutelkorpus ist aus einer Verbundfolie mit zumindest zwei im Bereich der Folienkanten angeordneten Verbundfolienrändern gebildet.

Die Erfindung betrifft ferner ein Verfahren zum Herstellen einer Rundbodenverpackung nach dem Oberbegriff des Anspruchs 4. Das Verfahren eignet sich insbesondere zum Herstellen eines hier beschriebenen Rundbodenbeutels. Bei dem Verfahren wird der Rundboden mittels einer Bodenverbindung an dem Beutelkorpus angeordnet. Der Beutelkorpus ist aus einer Verbundfolie mit zumindest zwei Verbundfolienkanten gebildet. Unter einer Verbundfolie wird eine Folie mit zumindest zwei Folienlagen verstanden, die einen Folienlagenverbund bilden. Die Folienlagen können zumindest einen Kunststoff umfassen oder daraus gebildet sein.

Schließlich betrifft die Erfindung ein Heißschmelzklebstoffgebinde zum Verarbeiten in einer Heißschmelzklebstoff-Auftrag-Einrichtung nach dem Oberbegriff des Anspruchs 6. Das Heißschmelzklebstoffgebinde umfasst einen Heißschmelzklebstoff und eine Heißschmelzklebstoffverpackung. Der Heißschmelzklebstoff wird bei Erhitzung, beispielsweise oberhalb einer Temperatur von etwa 100°C bis etwa 120°C, schmelzflüssig und kann mittels der Heißschmelzklebstoff-Auftrag-Einrichtung auf ein Objekt (zäh-)flüssig aufgetragen werden. Beim Erkalten des erhitzten Klebstoffs wird der Klebstoff zäher oder fest. Der Heißschmelzklebstoff kann auf Polyurethan-Basis (PU) gebildet sein, insbesondere kann der Heißschmelzklebstoff Lösungsmittel oder aggressive chemische Bestandteile enthalten.

### TECHNOLOGISCHER HINTERGRUND

Rundbodenbeutel werden beispielsweise in der DE 202 17 344 U1 oder in der DE 20 2006 019 464 U1 beschrieben. Derartige Rundbodenbeutel eignen sich zum Verpacken von Heißschmelzkleber-Gebinden für überwiegend industrielle Anwendungen. Heißschmelzklebstoffe werden auch als Hotmelt bezeichnet. Zum Herstellen einer Rundbodenverpackung wird ein schlauchartiger Mantel mit einem Bodenelement in mehreren, zum Teil aufwändigen oder fehleranfälligen Prozessschritten verbunden, u.a. durch eine Siegelnaht. Zur Vermeidung von Rückständen des Verpackungsinhalts beim Entleeren des Beutels umfasst die Innenseite des Rundbodenbeutels eine Polypropylen-Schicht (PP-Schicht). Beim Entleeren des Verpackungsbeutels können Rückstände in der Verpackung zurückbleiben.

### DARSTELLUNG DER ERFINDUNG

Der Erfindung liegt die Aufgabe zugrunde, Maßnahmen anzugeben, mit denen die Handhabung von Heißschmelzkleber-Gebinden insofern verbessert wird, als der Verpackungsinhalt mit geringem Aufwand aus der Gebinde-Verpackung entnehmbar sein soll, wobei die Verpackung mit möglichst geringem Aufwand und/oder zu möglichst geringen Kosten herstellbar sein soll. Diese Aufgabe wird durch einen Rundbodenbeutel nach Anspruch 1 gelöst. Vorteilhafte Ausgestaltungen der Erfindung sind Gegenstand der Unteransprüche. Der Folienrand des hier beschriebenen Beutels umfasst die Folienkante, d. h. die stirnseitige Schnittkante der Folie, sowie einen daran angrenzenden Randbereich. Die zumindest zwei Verbundfolienränder überlappen einander nicht und sind miteinander durch eine Randverbindung so verbunden, dass der Beutelkorpus schlauchartig gebildet ist. Die schlauchartige Verbundfolie des Beutelkorpus bildet den Beutelmantel. Die Randverbindung des Beutelkorpus des erfindungsgemäßen Rundbodenbeutels umfasst zumindest ein Siegelmedium, mit dem die Verbundfolienränder des Beutelkorpus miteinander, etwa durch (hochfrequentes) Siegeln, Heißsiegeln und/oder Schweißen, verbunden sind. Durch das Siegelmedium wird erreicht, dass der Beutelkorpus aus einer (zugeschnittenen) Folie vereinfacht herstellbar ist. Bei der Randverbindung ist vorgesehen, dass die Folienkanten "Stoß-auf-Stoß" oder nahezu "Stoß-auf-Stoß" aneinander liegen, d.h. die Kanten der nicht überlappenden Ränder sind aneinander anstoßend oder zueinander eng benachbart angeordnet. Es kann ein Spalt zwischen den Folienkanten vorgesehen sein, der jedoch beliebig klein sein kann. Bei genauer Fertigung des Beutelkorpus kann ein etwaiger Spalt zwischen den Kanten verschwinden oder nahezu verschwinden. Das Siegelmedium ist streifenartig und so angeordnet, dass es die aneinander liegenden Kanten respektive Ränder zumindest bereichsweise überdeckt oder überlappt. Das Siegelmedium kann eine dichtende Wirkung auf die Randverbindung ausüben. Ein Überlappen der Folienränder im Bereich der Kanten respektive im Bereich der Randverbindung ist ebenso wenig vorgesehen wie eine aufwändige Flossennaht . Das Siegelmedium ist streifenartig gebildet und es überlappt die einander nicht überlappenden Verbundfolienränder zumindest bereichsweise. Das Siegelmedium ist an dem Beutelkorpus innenseitig und/oder außenseitig angeordnet - etwa bezogen auf das Beutelvolumen.
Der Beutelkorpus ist mit dem Rundboden, insbesondere durch Heißsiegeln, durch ein im Bereich der Bodenverbindung angeordnetes streifenartiges Siegelmedium verbunden. Verbundfolie des Beutelkorpus und Rundboden überlappen einander dabei erfindungsgemäß nicht. Wie oben beschrieben, wird dadurch die Fertigung der Verpackung vereinfacht.
Das Siegelmedium kann beispielsweise als Siegelband gebildet sein. Das Siegelband wird über die Ränder der Randverbindung gelegt und anschließend durch einen Heißsiegelvorgang mit den Folienrändern verbunden respektive verschweißt. Beim Heißsiegeln wird das Material des Siegelbandes, insbesondere stoffschlüssig, mit dem Material der Verbundfolie des Beutelkorpus verbunden. Mit dem bandförmigen Siegelmedium wird erreicht, dass eine Naht der Randverbindung nicht oder kaum sichtbar ist. Es wird ferner damit erreicht, dass die runde (ovale) Form des Beutels respektive dessen Rundheit nicht oder nahezu nicht beeinträchtigt wird. Das Siegelmedium ist als Folie gebildet, insbesondere als Verbundfolie. Die Folie des Siegelmediums könnte aus einem Material gebildet sein oder ein Material umfassen, welches mit zumindest einer Schicht der Verbundfolie des Beutelkorpus siegel- oder schweißfähig ist. Für das Siegelmedium kann eine mehrlagige Verbundfolie vorgesehen sein oder eine Monofolie. Die (Verbund-)Folie des Siegelmediums kann bevorzugt ein Polyolefin, insbesondere Polypropylen (PP), umfassen oder daraus gebildet sein. Sofern die Verbundfolie, aus dem der Beutelkorpus gebildet ist, ebenfalls eine Schicht oder eine Lage umfasst, die ein Polyolefin, insbesondere PP, umfasst, können die materialgleichen Schichten der Folie des Beutelkorpus und der des Siegelmediums einfach, etwa durch Heißsiegeln, miteinander verbunden respektive verschweißt werden.
Ein Überlappen der Verbundfolienränder ist nicht vorgesehen. Vielmehr sind die Folienränder durch eine Randverbindung miteinander verbunden, wobei ein schlauchartiger Beutelkorpus gebildet wird. Zum vereinfachten Öffnen und/oder Entleeren der Verpackung umfasst das Siegelmedium ein Trennmedium, mit dem die miteinander verbundenen Rundbodenbestandteile (Folienränder des Beutelkorpus, Siegelmedium) voneinander trennbar sind. Durch das Trennmedium in dem Siegelmedium kann der Rundbodenbeutel entlang der Randverbindung geöffnet werden, wodurch der Beutelinhalt vereinfacht und besser aus dem Rundbodenbeutel entnommen respektive ausgeschält werden kann. Es bleiben demnach weniger Rückstände in der Verpackung, was zum einen die Wirtschaftlichkeit des Heißschmelzklebstoff-Gebindes verbessert, und was zum anderen zu einer umweltverträglicheren Nutzung des Gebindes führt, da bei der Verpackungsentsorgung weniger Klebstoff-Inhalt in der Verpackung zurückbleibt. Wahlweise kann das Siegelmedium peelfähig sein, d. h. die Siegelverbindung zwischen Siegelmedium und Verbundfolie des Beutelkorpus kann auftrennbar sein. Das Trennmedium kann als Aufreißfaden oder -bändchen gebildet sein, welches in dem Siegelmedium angeordnet ist. Durch das Betätigen des Aufreißbändchens wird die Randverbindung entlang des Siegelmediums aufgetrennt.

Im Hinblick auf eine möglichst einfache und kostengünstige Herstellung des Rundbodenbeutels kann vorgesehen sein, dass der Rundboden aus einer Verbundfolie gebildet ist. Der Rundboden umfasst zumindest eine Rundung, d. h. einen Rand mit zumindest abschnittsweise rundem Verlauf. Der Rundboden kann kreisförmig oder oval gebildet sein.

Die Verbundfolie des Beutelkorpus und/oder des Rundbodens und/oder des Siegelmediums kann zumindest zweilagig gebildet sein. Eine (erste) Lage der Verbundfolie kann einen thermoplastischen Kunststoff, vorzugsweise Polyester, insbesondere Polyethylenterphthalat (PET), umfassen oder daraus gebildet sein. PET ist thermisch und mechanisch stabiler als beispielsweise PP, besser bedruckbar und inzwischen günstig beschaffbar. Insofern kann die PET-Lage bevorzugt außenseitig angeordnet sein.

Eine (erste oder eine zweite) Lage der Verbundfolie kann ein Polyolefin, insbesondere Polypropylen (PP), umfassen oder daraus gebildet sein. Heißschmelzklebstoffe neigen dazu, an PP wenig anzuhaften, so dass der Klebstoff von dem PP einfach ablösbar ist. Insofern eignet sich PP für die bezogen auf das Verpackungsvolumen innenseitig angeordnete Lage der Folie. PP ist ein Thermoplast, der sich mit geringem Aufwand verarbeiten, insbesondere siegeln oder verschweißen, läßt. Im Hinblick auf die mechanischen oder thermischen Eigenschaften kann zumindest eine Lage der Verbundfolie ein verstrecktes oder orientiertes Polypropylen (Oriented PP, OPP) umfassen oder daraus gebildet sein. Zumindest eine Lage der Verbundfolie kann ein ungerecktes Polypropylen (Cast PP, CPP) umfassen oder daraus gebildet sein.

Die Verbundfolie kann eine Barriere-Lage oder -schicht umfassen, die bevorzugt aus einem Metall oder einer Metalllegierung, insbesondere umfassend Aluminium, gebildet ist. Die Barriereschicht ist geeignet, die thermische Stabilität des Rundbodenbeutels zu verbessern, was bei der Heißbefüllung der Verpackung mit dem Verpackungsinhalt wünschenswert ist. Die Barriereschicht dient ferner der Vermeidung der Diffusion von (zumeist aggressiven) Stoffen oder Stoffbestandteilen aus dem Verpackungsvolumen durch die Folie der Verpackung.

Bevorzugt ist eine Konfiguration des Beutelkorpus vorgesehen, bei dem außenseitig (bezogen auf das Beutelvolumen) eine PET-Lage angeordnet ist, innenseitig einen PP-Lage oder CPP-Lage oder OPP-Lage und als Zwischenschicht zwischen der PET-Lage und der PP- respektive CPP- respektive OPP-Lage eine Aluminium-Lage (Alu-Lage). Zwischen der Alu-Lage und einer zu der Alu-Lage benachbarten Folienlage kann ein Haftvermittler vorgesehen sein. Bei dieser bevorzugten, mehrlagigen Konfiguration hat der Klebstoffinhalt Kontakt mit der PP- respektive CPPrespektive OPP-Lage.

Es kann auch eine Folien-Konfiguration vorgesehen sein, bei der die äußere Lage und die innere Lage PP oder CPP oder OPP umfassen oder daraus gebildet sind, beispielsweise innen PP und außen PP, beispielsweise innen CPP und außen CPP, oder beispielsweise innen OPP und außen OPP, oder andere Kombinationen aus PP und/oder CPP und/oder OPP. Da hier jeweils weniger KunststoffMaterialien verwendet werden, ist diese Variante einfacher und nachhaltiger herstellbar.
Für den Rundboden kann ein Folienverbund vorgesehen sein, der innenseitig und außenseitig PP oder CPP oder OPP umfasst oder daraus gebildet ist. Der Rundboden kann eine Zwischenschicht aus einem Metall, etwa eine Alu-Lage, umfassen.
Maßnahmen zum Verbessern der Handhabung von Heißschmelzklebergebinden ergeben sich ferner durch ein Verfahren zum Herstellen einer Rundbodenverpackung nach Anspruch 4. Bei der Rundbodenverpackung handelt es sich um einen hier beschriebenen Rundbodenbeutel. Das Verfahren sieht vor, dass die zumindest zwei Verbundfolienkanten miteinander durch eine Randverbindung verbunden werden, indem die den Beutelkorpus bildende Verbundfolie um ein Verbindungswerkzeug gelegt wird. Die Verbundfolienränder überlappen dabei einander nicht. Der Beutelkorpus bildet einen schlauchartigen Mantel. Die Ränder des Beutelkorpus sind mit einem Siegelmedium miteinander verbunden. Das Verbindungswerkzeug kann einen runden (oder ovalen) respektive (kreis-)zylindrisch geformten Korpus umfassen. Es kann als (Hohl-)Zylinder oder als Dorn oder wirkungsähnlich gebildet sein.
Die Folienkanten der Verbundfolienränder sind auf dem Verbindungswerkzeug bevorzugt Stoß-an-Stoß aneinander angeordnet. Stoß-an-Stoß bedeutet, dass die eine Folienkante an der anderen Folienkante so anliegt, dass ein etwaiger Zwischenraum zwischen den Folienkanten verschwindet oder nahezu verschwindet, ohne dass die Ränder respektive Kanten dabei überlappen, d.h. ohne dass die Ränder bereichsweise übereinander liegend angeordnet sind. Das Siegelmedium wird bei dem Verfahren im Bereich der Stoß-an-Stoß-Verbindung der Verbundfolienränder angeordnet. Das Siegelmedium kann als Siegelstreifen oder als Siegelband an den Verbundfolienrändern angeordnet werden. Das Siegelmedium überlappt die Verbundfolienränder zumindest bereichsweise. Das Siegelmedium kann an dem Beutelkorpus - bezogen auf das Beutelvolumen - innenseitig und/oder außenseitig angeordnet werden. Soll eine besonders dichte oder stabile Ränderverbindung erreicht werden, können zwei Siegelbänder vorgesehen sein, von denen eines innenseitig angeordnet ist und das andere außenseitig.

In dem Siegelmedium ist ein als Aufreißhilfe gebildetes Trennmedium angeordnet, mit dem die hergestellte und befüllte Rundbodenverpackung zum vereinfachten Entnehmen des Verpackungsinhalts entlang der Randverbindung oder entlang eines Abschnitts der Randverbindung aufreißbar respektive auftrennbar ist. Das Trennmedium kann einen Faden oder einen Draht oder ein, verglichen mit dem Siegelmedium stabiler gebildetes, (Kunststoff-)Band umfassen. Der schlauchartige Beutelkorpus ist mit dem Rundboden, insbesondere durch Heißsiegeln, durch ein im Bereich der Bodenverbindung angeordnetes, streifenartiges Siegelmedium verbunden. Die Verbundfolie des Beutelkorpus und der Rundboden überlappen sich nicht.
Gemäß einer bevorzugten Variante des Verfahrens wird der Beutelkorpus mittels einer an sich bekannten Schlauchbeutelmaschine gefertigt.
Maßnahmen zum Verbessern der Handhabung von Heißschmelzklebergebinden ergeben sich ferner durch ein Heißschmelzklebstoffgebinde zum Verarbeiten in einer Heißschmelzklebstoff-Auftrag-Einrichtung nach Anspruch 6. Das Heißschmelzklebstoffgebinde umfasst einen Heißschmelzklebstoff und eine Heißschmelzklebstoffverpackung. Die Heißschmelzklebstoffverpackung wird als hier beschriebener Rundbodenbeutel gebildet. Die Heißschmelzklebstoffverpackung kann gemäß einem hier beschriebenen Herstellungsverfahren hergestellt sein.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Rundbodenbeutels dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: eine schematische Ansicht eines Rundbodenbeutels, und
- Fig. 2A-C: schematische Schnittansichten des Bereichs des Beutelkorpus, in dem verschiedene Varianten der Randverbindung angeordnet sind.

### DETAILLIERTE BESCHREIBUNG VON AUSFÜHRUNGSBEISPIELEN

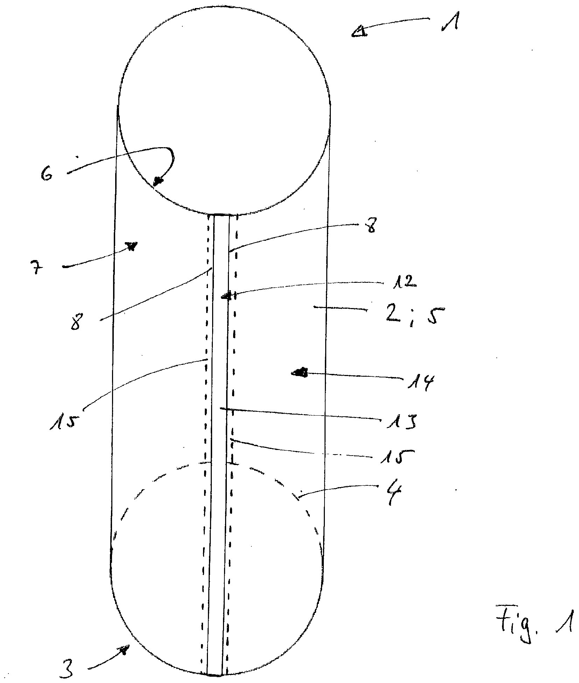

Fig. 1 zeigt eine schematische Ansicht eines Rundbodenbeutels 1. Der Rundbodenbeutel 1 umfasst einen Beutelkorpus 2 und einen mit dem Beutelkorpus 2 verbundenen Rundboden 3. In dem Rundbodenbeutel 1 ist ein Heißschmelzklebstoff 14 als Beutelinhalt vorgesehen. Insofern zeigt die Fig. 1 auch ein Heißschmelzklebstoff-Gebinde. Die Bodenverbindung 4 zwischen Beutelkorpus 2 und Rundboden 3 umfasst zumindest eine Siegelnaht.

Der Beutelkorpus 2 ist aus einer mehrlagigen Verbundfolie 5 gebildet. Die innere Lage 6 der Verbundfolie 5 ist aus PP oder aus CPP oder aus OPP gebildet. Die äußere Lage 7 der Verbundfolie 5 des Beutelkorpus 2 ist aus PP oder aus CPP oder aus OPP gebildet. Zwischen der äußeren Lage 7 und der inneren Lage 6 kann eine Zwischenlage angeordnet sein, die beispielsweise aus Aluminium gebildet ist.

Der Rundboden 3 des Rundbodenbeutels 1 gemäß Fig. 1 ist aus einer mehrlagigen Folie gebildet, beispielsweise aus dem Folienverbund 5, aus dem auch der Beutelkorpus 2 gebildet ist. Der Rundboden 3 kann alternativ aus einem Folienverbund gebildet sein, der sich hinsichtlich zumindest einer Folienlage von dem Verbund des Beutelkorpus 2 unterscheidet. So kann für den Boden 3 ein Verbund aus OPP/Alu/CPP vorgesehen sein, wobei die OPP-Lage außenseitig und die CPP-Lage innenseitig angeordnet ist. Die CPP-Lage zeichnet sich dadurch aus, dass sie wenig reaktiv ist, mithin inert, insbesondere im Hinblick auf Wechselwirkungen mit dem Heißschmelzklebstoff 14, der den Beutelinhalt bildet.

Der Beutelkorpus 2 des Rundbodenbeutels 1 gemäß Fig. 1 ist aus einer im Wesentlichen rechteckigen Verbundfolie 5 gebildet, die auf ein zylinderförmiges Verbindungswerkzeug (nicht dargestellt in den Figuren 1 bis 2C) aufgelegt wird, wodurch die den Beutelkorpus 2 bildende Folie 5 schlauchartig angeordnet wird. So entsteht zunächst die schlauchartige Form des Mantels des Beutelkorpus 2. Die Kanten 8 der Verbundfolie 5 stoßen dabei so aneinander, dass keine Überlappung der Kanten 8 stattfindet. Im Bereich der aneinander stoßenden Folienkanten 8 der Verbundfolie 5 wird ein Siegelmedium 13 angeordnet. Das Siegelmedium 13 wird mit den Folienrändern 15 verbunden. Das Siegelmedium 13 ist als Siegelband gebildet, welches über (und/oder unter) der Stoßstelle der Folienkanten 8 angeordnet ist. Das Verbinden des Siegelmediums 13 mit den Folienrändern 15 erfolgt durch Energieeintrag in das Siegelmedium 13 und/oder in die Bereiche der Folie, die die Folienränder 15 respektive Folienkanten 8 umfassen. Der Energieeintrag kann durch Hochfrequenzmaßnahmen oder durch Heißsiegeln erfolgen. Es kann auch ein Schweißvorgang zum Verbinden des Siegelmediums 13 mit den Rändern 15 vorgesehen sein.

Die Ränderverbindung 12 kann eine Siegelnaht umfassen, durch die jeder der Ränder 15 mit dem Siegelmedium 13 verbunden ist. So kann die Siegelnaht eine solche Breite aufweisen, dass sich die Siegelnaht über die Breite des Siegelmediums 13 oder nahezu über die breite des Siegelmediums 13 erstreckt. Es können wahlweise mehrere (schmale) Siegelnähte der Randverbindung 12 vorgesehen sein, etwa eine Naht pro Rand 15.

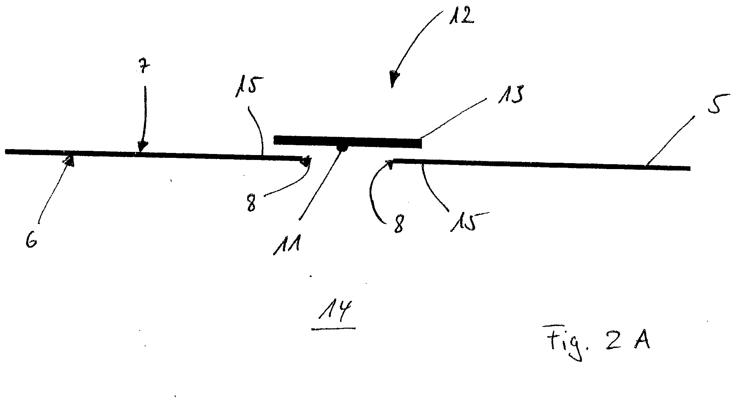

Den Figuren 2A bis 2C können Varianten der Randverbindung 12 entnommen werden. Die Figuren 2A bis 2C zeigen schematisch jeweils einen Ausschnitt eines Schnitts durch die Verbundfolie 5 des Beutelkorpus 2 im Bereich der Randverbindung 12. Gemäß Fig. 2A ist vorgesehen, dass das Siegelmedium 13 außenseitig angeordnet ist. Das Siegelmedium 13 überlappt an der äußeren Folienlage die Folienränder 15, so dass der in Figuren 2A bis 2C übertrieben groß dargestellte Spalt zwischen den Folienrändern 15 vollständig überdeckt wird. Dass das Siegelmedium 13 gemäß der Figuren 2A bis 2C von der Folie 5 beabstandet ist, dient nur der Veranschaulichung. Die Randverbindung 12 wird so gebildet, dass das Siegelmedium 13 mit den Folienrändern 15 kontaktiert ist. Zwischen dem Siegelmedium 13 und den Folienrändern 15 wird eine stoffschlüssige Verbindung gebildet.

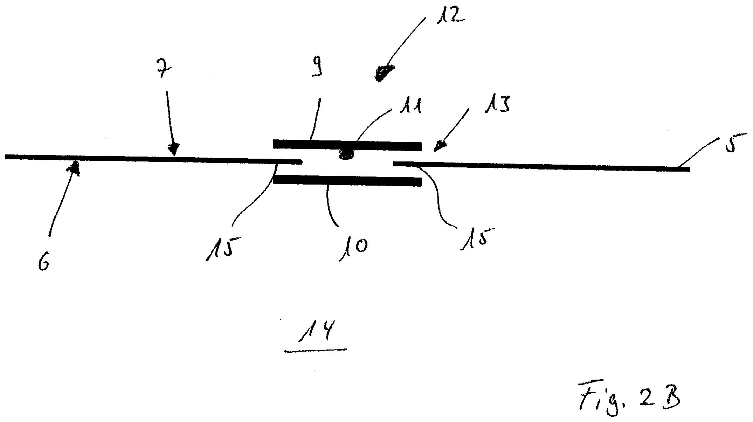

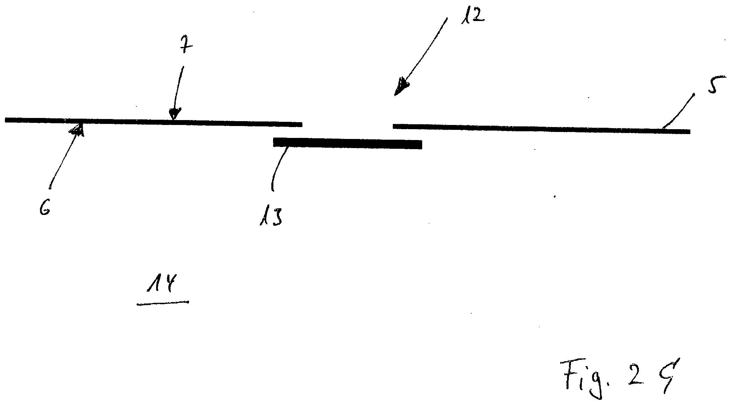

Die Fig. 2B zeigt eine variante der Randverbindung 12, bei der das Siegelmedium 13 mehrteilig gebildet ist, wobei ein erster Teil 9 des Siegelmediums 13 innenseitig und ein zweiter Teil 10 des Siegelmediums 13 außenseitig angeordnet sind. Die Teile 9, 10 des Siegelmediums 12 und die Folienränder 15 werden miteinander verbunden. Eine weitere Variante der Randverbindung 12 kann der Fig. 2C entnommen werden. Gemäß Fig. 2C ist das Siegelmedium 13 einteilig gebildet. Das Siegelmedium 13 ist innenseitig angeordnet, wo es die Folienränder 15 respektive die Kanten 8 miteinander verbindet.

In dem Siegelmedium 13 gemäß der Fig. 2A ist ein als Aufreißband gebildetes Trennmedium 11 angeordnet. Mit dem Aufreißband (11) kann die Randverbindung 12 aufgetrennt werden. Damit kann der Beutelkorpus 2 entlang der Ausdehnung der Randverbindung 12 geöffnet werden, wodurch der Beutelinhalt (Heißschmelzklebstoff 14) vereinfacht aus dem Beutel 1 entnommen werden kann. Die Menge an Verpackungsrückständen wird dadurch reduziert, wodurch die Wirtschaftlichkeit der Verpackung 1 verbessert wird.

### BEZUGSZEICHENLISTE

- 1: Rundbodenbeutel
- 2: Beutelkorpus
- 3: Rundboden
- 4: Bodenverbindung
- 5: Verbundfolie
- 6: innere Lage
- 7: äußere Lage
- 8: Folienkante
- 9: erster Teil
- 10: zweiter Teil
- 11: Trennmedium
- 12: Randverbindung
- 13: Siegelmedium
- 14: Heißschmelzklebstoff
- 15: Verbundfolienrand

## Patentansprüche

1. Rundbodenbeutel (1) zum Verpacken von Heißschmelzklebstoffen (14) umfassend
einen Beutelkorpus (2) und
einen mittels einer Bodenverbindung (4) an dem Beutelkorpus (2) angeordneten Rundboden (3), wobei
der Beutelkorpus (2) aus einer Verbundfolie (5) mit zumindest zwei, im Bereich der Folienkanten (8) angeordneten Verbundfolienrändern (15) gebildet ist, wobei die Verbundfolie (5) zumindest zweilagig gebildet ist, wobei eine Lage (7) der Verbundfolie (5) einen thermoplastischen Kunststoff, vorzugsweise Polyester, insbesondere Polyethylenterphthalat (PET), umfasst, und/oder wobei eine Lage (6) der Verbundfolie (5) ein Polyolefin, insbesondere Polypropylen (PP), umfasst,
**dadurch gekennzeichnet, dass** die zumindest zwei Verbundfolienränder (15) einander nicht überlappen und miteinander durch eine Randverbindung (12) so verbunden sind, dass der Beutelkorpus (2) schlauchartig gebildet ist, wobei die Randverbindung (12) des Beutelkorpus (2) zumindest ein Siegelmedium (13) umfasst, mit dem die Verbundfolienränder (15) des Beutelkorpus (2) miteinander verbunden sind,
wobei das Siegelmedium (13) der Randverbindung (12) ein Trennmedium (11) umfasst, und wobei
das Siegelmedium (13) streifenartig gebildet ist,
das Siegelmedium (13) die einander nicht überlappenden Verbundfolienränder (15) zumindest bereichsweise überlappt, und
das Siegelmedium (13) an dem Beutelkorpus (2) innenseitig und/oder außenseitig angeordnet ist,
das Siegelmedium (13) aus einer Folie, insbesondere aus einer Verbundfolie (5), gebildet ist, wobei die (Verbund-)Folie des Siegelmediums (13) bevorzugt ein Polyolefin, insbesondere Polypropylen (PP), umfasst oder daraus gebildet ist, und
wobei das Siegelmedium (13) der Randverbindung (12) ein Trennmedium (11) umfasst,
wobei der schlauchartige Beutelkorpus (2) mit dem Rundboden (3), insbesondere durch Heißsiegeln, durch ein im Bereich der Bodenverbindung (4) angeordnetes weiteres streifenartiges Siegelmedium (13) verbunden ist, wobei sich die Verbundfolie (5) des Beutelkorpus (2) und der Rundboden (3) nicht überlappen.

2. Rundbodenbeutel (1) nach Anspruch 1, **dadurch gekennzeichnet, dass** der Rundboden (3) aus einer Verbundfolie (5) gebildet ist.

3. Rundbodenbeutel (1) nach Anspruch 1 oder2, **dadurch gekennzeichnet, dass** die Verbundfolie (5) eine Barriereschicht umfasst, die bevorzugt aus einem Metall oder einer Metalllegierung, insbesondere umfassend Aluminium, gebildet ist.

4. Verfahren zum Herstellen eines Rundbodenbeutels (1) nach einem der Ansprüche 1 bis 3, bei dem ein Rundboden (3) mittels einer Bodenverbindung an dem Beutelkorpus (2) angeordnet wird, wobei der Beutelkorpus aus einer Verbundfolie (5) mit zumindest zwei, im Bereich der Folienkanten (8) angeordneten Verbundfolienrändern gebildet ist, **dadurch gekennzeichnet, dass** die zumindest zwei Verbundfolienränder miteinander durch eine Randverbindung (12) verbunden werden, indem die den Beutelkorpus bildende Verbundfolie um ein Verbindungswerkzeug gelegt wird,
so dass die Verbundfolienränder einander nicht überlappen,
und so dass der Beutelkorpus einen schlauchartigen Mantel bildet,
wobei die Kanten des Beutelkorpus mit einem Siegelmedium (13) miteinander verbunden werden, wobei die Folienkanten der Verbundfolienränder auf dem Verbindungswerkzeug Stoß-auf-Stoß aneinander angeordnet werden, das Siegelmedium im Bereich der Stoß-auf-Stoß-Verbindung der Verbundfolienränder angeordnet wird, und das Siegelmedium als Siegelstreifen oder Siegelband an den Verbundfolienränder derart angeordnet wird, dass das Siegelmedium die Verbundfolienränder zumindest bereichsweise überlappt, wobei das Siegelmedium an dem Beutelkorpus innenseitig und/oder außenseitig angeordnet wird, und in dem Siegelmedium ein als Aufreißhilfe gebildetes Trennmedium (11) angeordnet wird, mit dem die hergestellte und befüllte Rundbodenverpackung zum vereinfachten Entnehmen des Verpackungsinhalts entlang der Randverbindung oder entlang eines Abschnitts der Randverbindung auftrennbar ist, und wobei der schlauchartige Beutelkorpus (2) mit dem Rundboden (3), insbesondere durch Heißsiegeln, durch ein im Bereich der Bodenverbindung (4) angeordnetes weiteres streifenartiges Siegelmedium (13) verbunden wird, wobei sich die Verbundfolie (5) des Beutelkorpus (2) und der Rundboden (3) nicht überlappen.

5. Herstellungsverfahren nach Anspruch 4, **dadurch gekennzeichnet, dass** der Beutelkorpus mittels einer Schlauchbeutelmaschine gefertigt wird.

6. Heißschmelzklebstoffgebinde zum Verarbeiten in einer Heißschmelzklebstoff-Auftrag-Einrichtung umfassend einen Heißschmelzklebstoff (14) und eine Heißschmelzklebstoffverpackung, **dadurch gekennzeichnet, dass** die Heißschmelzklebstoffverpackung als Rundbodenbeutel (1) nach einem der Ansprüche 1 bis 3 gebildet ist.

## Claims

1. A round-bottomed bag (1) for packaging hot-melt adhesives (14) comprising
a bag body (2) and
a round bottom (3) arranged on the bag body (2) by means of a bottom joint (4), wherein
the bag body (2) is formed from a laminated film (5) with at least two laminated film edges (15) arranged in the region of the film edge faces (8), wherein the laminated film (5) is formed at least two-layered, wherein a layer (7) of the laminated film (5) comprises a thermoplastic plastic, preferably polyester, in particular polyethylene terephthalate (PET), and/or wherein a layer (6) of the laminated film (5) comprises a polyolefin, in particular polypropylene (PP),
**characterised in that**
the at least two laminated film edges (15) do not overlap one another and are joined together by an edge joint (12), in such a way that the bag body (2) is formed tubular,
wherein the edge joint (12) of the bag body (2) comprises at least one sealing medium (13), with which the laminated bag edges (15) of the bag body (2) are joined together,
wherein the sealing medium (13) of the edge joint (12) comprises a separating medium (11), and wherein
the sealing medium (13) is formed strip-like,
the sealing medium (13) overlaps at least in sections the non-overlapping laminated film edges (15), and
the sealing medium (13) is arranged on the inside and/or on the outside on the bag body (2),
the sealing medium (13) is formed from a film, in particular from a laminated film (5), wherein the (laminated) film of the sealing medium (13) preferably comprises a polyolefin, in particular polypropylene (PP), or is formed therefrom, and
wherein the sealing medium (13) of the edge joint (12) comprises a separating medium (11),
wherein the tubular bag body (2) is joined to the round bottom (3), in particular by hot sealing, by a further strip-like sealing medium (13) arranged in the region of the bottom joint (4), wherein the laminated film (5) of the bag body (2) and the round bottom (3) do not overlap.

2. The round-bottomed bag (1) according to claim 1, **characterised in that** the round bottom (3) is formed from a laminated film (5).

3. The round-bottomed bag (1) according to claim 1 or 2, **characterised in that** the laminated film (5) comprises a barrier layer, which is preferably made of a metal or a metal alloy, in particular comprising aluminium.

4. A method of producing a round-bottomed bag (1) according to any one of claims 1 to 3, wherein a round bottom (3) is arranged on the bag body (2) by means of a bottom joint, wherein the bag body is formed from a laminated film (5) with at least two laminated film edges arranged in the region of the film edge faces (8),
**characterised in that**
the at least two laminated film edges are joined together by means of an edge joint (12), whereby the laminated film forming the bag body is placed around a joining tool, so that the laminated film edges do not overlap one another, and so that the bag body forms a tubular envelope, wherein the edge faces of the bag body are joined together with a sealing medium (13), wherein the film edge faces of the laminated film edges are arranged edge-to-edge with one another on the joining tool, the sealing medium is arranged in the region of the edge-to-edge join of the laminated film edges, and the sealing medium is arranged as a sealing strip or sealing band on the laminated film edges, in such a way that the sealing medium overlaps the laminated film edges at least in sections, wherein the sealing medium is arranged on the inside and/or on the outside on the bag body, and a separating medium (11) formed by a tear-open aid is arranged in the sealing medium, by means of which separating medium the produced and filled round-bottomed package can be split open along with the edge joint or along a portion of the edge joint for simplified removal of the package contents, and wherein the tubular bag body (2) is joined to the round bottom (3), in particular by hot sealing, by means of a further strip-like sealing medium (13) arranged in the region of the bottom joint (4), wherein the laminated film (5) of the bag body (2) and the round bottom (3) do not overlap.

5. A production method according to claim 4, **characterised in that** the bag body is produced by means of a tubular bag machine.

6. A hot-melt adhesive container for processing in a hot-melt adhesive application device comprising a hot-melt adhesive (14) and a hot-melt adhesive package, **characterised in that** the hot-melt adhesive package is formed as a round-bottomed bag (1) according to any one of claims 1 to 3.

## Revendications

1. Sachet à base ronde (1) destiné à emballer des colles thermofusibles (14), comprenant
un corps de sachet (2) et
une base ronde (3), placée au moyen d'un assemblage de base (4) sur le corps de sachet (2),
le corps de sachet (2) étant formé en un film composite (5) avec au moins deux bords de film composite (15), placés dans la région des arêtes du film (8), le film composite (5) étant créé en version au moins bicouches, une couche (7) du film composite (5) comprenant une matière thermoplastique, de préférence du polyester, notamment du poly(téréphtalate d'éthylène) (PET), et/ou une couche (6) du film composite (5) comprenant une polyoléfine, notamment du polypropylène (PP), **caractérisé en ce que** les au moins deux bords de film composite (15) ne se chevauchent pas et sont assemblés l'un à l'autre par un assemblage marginal (12), de telle sorte que le corps de sachet (2) soit de forme tubulaire, l'assemblage marginal (12) du corps de sachet (2) comprenant au moins un agent de scellage (13) avec lequel les bords de film composite (15) du corps de sachet (2) sont assemblés l'un à l'autre,
l'agent de scellage (13) de l'assemblage marginal (12) comprenant un agent de séparation (11), et
l'agent de scellage (13) étant formé à la manière d'un ruban,
l'agent de scellage (13) chevauchant au moins par endroits les bords de film composite (15) qui ne se chevauchent pas, et
l'agent de scellage (13) étant placé sur la face intérieure et/ou sur la face extérieure sur le corps de sachet (2),
l'agent de scellage (13) étant formé en un film, notamment en un film composite (5), le film(composite) de l'agent de scellage (13) comprenant de préférence ou étant formé en une polyoléfine, notamment du polypropylène (PP), et
l'agent de scellage (13) de l'assemblage marginal (12) comprenant un agent de séparation (11),
le corps de sachet (2) de forme tubulaire étant assemblé avec la base ronde (3), notamment par thermoscellage, par un agent de scellage (13) supplémentaire en forme de ruban, placé dans la région de l'assemblage de base (4), le film composite (5) du corps de sachet (2) et de la base ronde (3) ne se chevauchant pas.

2. Sachet à base ronde (1) selon la revendication 1, **caractérisé en ce que** la base ronde (3) est formée en un film composite (5).

3. Sachet à base ronde (1) selon la revendication 1 ou 2, **caractérisé en ce que** le film composite (5) comprend une couche formant barrière, qui est formée de préférence en un métal comprenant notamment de l'aluminium.

4. Procédé destiné à fabriquer un sachet à base ronde (1) selon l'une quelconque des revendications 1 à 3, lors duquel on place une base ronde (3) au moyen d'un assemblage de base sur le corps de sachet (2), le corps de sachet étant formé en un film composite (5) avec au moins deux bords de film composite, placés dans la région des arêtes du film (8), **caractérisé en ce qu'**on assemble l'un à l'autre les au moins deux bords de film composite par un assemblage marginal (12), **en ce qu'**on pose le film composite formant le corps de sachet autour d'un outil d'assemblage,
de sorte que les bords de film composite ne se chevauchent pas
et de sorte que le corps de sachet forme une enveloppe de forme tubulaire,
lors duquel on assemble les uns aux autres les arêtes du corps de sachet avec un agent de scellage (13), sachant que l'on place les arêtes du film des bords de film composite en aboutement mutuel sur l'outil d'assemblage, qu'on place l'agent de scellage dans la région de l'assemblage en aboutement des bords de film composite et qu'on place l'agent de scellage en tant que ruban de scellage ou de bande de scellage sur les bords de film composite de telle sorte que l'agent de scellage chevauche au moins par endroits les bords de film composite, sachant qu'on place l'agent de scellage sur la face intérieure et/ou sur la face extérieure du corps de sachet, et qu'on place dans l'agent de scellage un agent de séparation (11) conçu en tant qu'aide à la rupture, à l'aide de laquelle l'emballage à base ronde fabriqué et rempli peut être sectionné le long de l'assemblage marginal ou le long d'une portion de l'assemblage marginal, pour faciliter le prélèvement du contenu du sachet, et lors duquel on assemble le corps de sachet (2) avec la base ronde (3), notamment par thermoscellage, par un agent de scellage (13) en forme de ruban supplémentaire, placé dans la région de l'assemblage de base (4), le film composite (5) du corps de sachet (2) et de la base ronde (3) ne se chevauchant pas.

5. Procédé de fabrication selon la revendication 4, **caractérisé en ce qu'**on fabrique le corps de sachet au moyen d'une machine à sachets tubulaires.

6. Contenant de colle thermofusible destiné à être mis en oeuvre dans un dispositif d'application de colle thermofusible, comprenant une colle thermofusible (14) et un emballage de colle thermofusible, **caractérisé en ce que** l'emballage de colle thermofusible est formé en tant que sachet à base ronde (1) selon l'une quelconque des revendications 1 à 3.
